# EUROPEAN PATENT APPLICATION

(11) **EP 4 325 123 A1**
(43) Date of publication of application: **21.02.2024**
(21) Application number: 22191108.4
(22) Date of filing: 19.08.2022
(51) Int. Cl.: F24C 15/20

(54) **EXTRACTION DEVICE FOR EXTRACTION OF AIR AND HOUSEHOLD APPLIANCE**

(71) Applicant: ELECTROLUX APPLIANCES AKTIEBOLAG, 105 45 Stockholm (SE)
(72) Inventor: FALCOMER, Daniele, 33080 Porcia (IT); RADHIMA, Ines, 47122 Forli (IT); LUKIANOVA, Mariia, 197342 Saint-Petersburg (RU); MERLONI, Marco, 60043 Cerreto (AN) (IT)
(74) Representative: Electrolux Group Patents

(57) **Abstract**

The present invention concerns a system comprising an extraction device (10, 114) for extraction of air and a filter element or unit (26, 162) for an extraction device (10, 114). The filter element or unit (26, 162) is configured to be implemented selectively in an extraction device (10, 114), which is either of the type of an extraction hood (10) or a downdraft extraction device (114), which further comprises a cooking hob (112). The filter element or unit (26, 162) comprises a first attachment means, which is compatible with and/or connectable to a second attachment means. The second attachment means is included in the extraction device (10, 114), which is selected for the implementation of the filter element or unit (26,162).

The present invention further concerns an extraction device (10, 114) for extraction of air, which air may include fumes and/or vapours. The extraction device (10, 114) includes an extraction system, which comprises a grease filter and further a first odour removing filter and a second odour removing filter (26, 162) .

## Description

The present invention relates to a system comprising an extraction device for extraction of air and a filter element or unit for an extraction device. The present invention also relates to an extraction device for extraction of air comprising an extraction system. The present invention further relates to a household appliance.

In order to support persons in performing domestic work, household appliances of different kinds are known. In particular, cooking processes are performed using cooking appliances. For example, cooking hobs comprise cooking zones for placement of cookware receiving the food to be cooked. During cooking processes on such cooking hobs cooking fumes and vapours are generated, which usually comprise grease and odorous substances. In order to remove such substances, extraction devices are installed in close proximity to the cooking hobs, either as range hoods positioned as a separate appliance above the cooking zones, or implemented in a combination appliance together with the cooking hob, more specifically attached on a bottom of the cooking hob forming a downdraft extraction device. Such an extraction device includes filter elements or units for a separation of at least the grease substances, but usually also of the odorous substances, what is particularly important in the case of an extraction device operated in a recirculation mode, i. e. with returning the filtered air into the ambient kitchen air. Consequently, such extraction devices are equipped with both a grease filter element or unit and additionally with an odour filter element or unit, for which activated carbon filter solutions are standard. However, it is also known to use another solution instead of such activated carbon filter, specifically an odour removing element or unit using catalytic reaction. In contrast to the use of an activated carbon filter, which regularly has to be replaced after its saturation with substances, a filter solution using catalytic reaction can increase the entire service life of the filtering system.

EP 3 819 548 A1 discloses a hood with an odour filter comprising a supporting element with a catalytic material and a radiating source for an irradiation of the catalytic material, which provides for a degradation of odorous substances. In order to further prolong the service life of the disclosed hood, the intensity and the wave length of the radiating source can be adjusted, especially as a reaction on ageing processes of the catalytic material. Nevertheless, even with a grease filter element or unit, which is placed upstream of the odour filter using catalytic reaction, such upstream filter is not capable of reducing the substances in the air conveyed through the extraction device to such an extent as to avoid an increasing saturation of the odour filter with substances, in particular with such substances which cannot be degraded by catalytic reaction.

It is an object of the present invention to provide an improved system comprising an extraction device for the extraction of air and a filter element or unit for an extraction device and/or an improved extraction device and/or an improved household appliance, which is/are configured to operate in an efficient way, especially in a cost-efficient way, and/or which is configured to be manufactured or provided in a cost-efficient way. It is a further object to prolong the service interval for the system, the extraction device and/or the household appliance.

The object is achieved by a system comprising an extraction device for the extraction of air and a filter element or unit for an extraction device by the features of claim 1.

According to a first aspect of the invention, a system comprising an extraction device for extraction of air and a filter element or filter unit for an extraction device is provided. This filter element or unit is configured to be implemented selectively in an extraction device, which is either of the type of an extraction hood or of the type of a downdraft extraction device, which further comprises a cooking hob. The filter element or unit comprises a first attachment means, which is compatible with and/or connectable to a second attachment means. The second attachment means is included in the extraction device, which is selected or selectable for the implementation of the filter element or unit.

The implementation of the filter element or unit in different types of extraction devices increases the flexibility in a production plant due to this way of improved modularization and related purchase and logistic costs can be limited.

The filter element or unit is preferably a photocatalytic filter element or unit, which may be illuminable by radiating means emitting UV light. The extraction hood may be a recirculation hood, which is preferably arranged or arrangeable above a cooking hob or a stove. The downdraft extraction device is or comprises particularly a downdraft extraction system or downdraft extraction unit of a combination appliance, which comprises a cooking hob in addition to the downdraft extraction device. Moreover, the second attachment means may specifically be arranged in an exhaust duct or chimney of the extraction hood. Additionally, or alternatively, specifically when the filter element or unit shall be implemented in a downdraft extraction device, the second attachment means may be arranged in a channel section of the downdraft extraction device. Said channel section is advantageously a positive pressure channel section of the air channel.

In some implementations, the exhaust duct or chimney of the extraction hood includes a diverter element or unit, which is configured to redirect exhaust airstream. This redirection may particularly be performed by splitting up the exhaust airstream into at least two exhaust airstreams with different directions. More particularly, these different directions are opposite directions, e. g. opposite horizontal directions. The diverter element or unit is preferably arranged or arrangeable at or forms an outlet of the exhaust duct or chimney. This outlet may be arranged at the highest position of the exhaust duct or chimney.

According to an embodiment, this filter element is an odour removing filter element, and it may be a second odour removing filter in applications including another odour removing filter element or unit, which increases the odour removing effect. Such increased odour removal is particularly achieved, when the first and second odour removing filter elements or units are of a different type.

The object is further achieved by an extraction device for extraction of air by the features of claim 4.

According to a second aspect of the invention, an extraction device for extraction of air is provided. The air particularly includes fumes and/or vapours. The extraction device includes an extraction system, which comprises a grease filter, a first odour removing filter and a second odour removing filter. In a general sense, the terms "first odour removing filter" and "second odour removing filter" shall not be understood as a specific connection in series in airstream direction, rather, an arbitrary arrangement of these two filters is generally possible.

The first odour removing filter is in particular an activated carbon filter. Further, the second odour removing filter is specifically at least one photocatalytic filter element or unit. A preferred solution for the second odour removing filter is based on Photo Electro Chemical Oxidation (PECO) technology, i. e. a PECO filter element or unit is used in the extraction device. The grease filter and the first odour removing filter may be included in or held by a common filter unit or carrier.

Specifically, the extraction device is configured to extract cooking fumes and vapours generated during a cooking process performed on a cooking hob. More specifically, the extraction device is configured to perform air purification and/or air sanitization activities.

With the proposal of such a multistage filtration using a grease filter and first and second odour removing filters, an extraction device is provided, which is configured to operate in an efficient way both in a cooking vent exhaustion mode and in an air purification mode and/or air sanitization mode. Specifically, due to the implementation of both a first odour removing filter and a second odour removing filter, the efficiency in removing odorous substances of the extraction system by using a photocatalytic unit is increased. Advantageously, the photocatalytic filter is a self-cleaning element or unit, so that any particular service operation, e. g. replacement of this filtration unit, may be avoided.

More specifically, the use of a second odour removing filter, particularly with the preferred photocatalytic filtration solution, may prolong the life of the first odour removing filter, which is specifically an activated carbon filter, as this second odour removing filter may be configured to degrade a part of the odorous substances, e. g. volatile organics, particularly in the ambient atmosphere. Therefore, it takes longer to saturate the preferred activated carbon filter, particularly taking into account repeated recirculation of the air during the operation of the extraction device, and the period between replacements of this filter element is prolonged. This practise is economically feasible for the user of this extraction device.

All in all, the solution according to the present invention offers a removal of odorous substance from the kitchen air at least to a high degree, which is not achievable with known solutions, e. g. based only on activated carbon filtration elements. Moreover, the increase of efficiency is not achieved at the expense of a particular impact on noise and pressure drop.

In some implementations, the second odour removing filter is arranged downstream of the grease filter. In particular, the second odour removing filter is arranged downstream of the first odour removing filter. In addition, or as an alternative, the second odour removing filter is arranged downstream of an extraction fan, which is configured to convey the air through an air channel of the extraction device. On the other hand, the second odour removing filter may alternatively be arranged upstream of the extraction fan. Preferably, the second odour removing filter is arranged at an end section of a positive pressure channel section of the air channel. With the particular arrangement downstream of the grease filter and favourably also downstream of the first odour removing filter, the second odour removing filter, specifically the photocatalytic filtration unit, may be prevented from soiling and particularly a steady efficiency of the second odour removing filter element or unit is ensured.

Moreover, the grease filter and particularly the first odour removing filter may be accessible at or through an air inlet opening of an air channel of the extraction device. In particular, the grease filter and particularly the first odour removing filter is or are removable from or through the air inlet opening. Moreover, the second odour removing filter may be accessible at or through an exhaust air outlet of the air channel. That way, necessary service operations are easily executable by such a convenient and facilitated access. More specifically, the second odour removing filter is removable from or through said exhaust air outlet. Consequently, even with the preferred self-cleaning property of the second odour removing filter, a service operation on this filter element or unit is nevertheless possible.

As previously indicated, the second odour removing filter is advantageously a photocatalytic filter element or unit comprising a filter element or surface with a catalyst. The catalyst is favourably a titanium oxide, more specifically titanium dioxide, catalyst. Instead of titanium oxide, any other metal oxide may be used. Preferably, the filter element or surface is illuminable by radiating means, which emit UV light, particularly UVA light. Moreover, the radiating means for photocatalytic degradation may be arranged or arrangeable spaced from the photocatalytic filter surface with a distance from the filter surface in the range of 5 to 40 mm, preferably 10 to 30 mm, more preferably 15 to 25 mm, most preferably with a distance of about 20 mm.

One specific solution for the system or the extraction device according to the present invention provides that the radiating means are included in the interior of an air channel of the extraction device. An arrangement of the radiating means upstream of the photocatalytic filter element or unit is preferred. With such arrangement, the radiating means emit radiation, specifically UV light, in at least approximately the same direction as the direction of the airstream.

According to a particularly specific embodiment, the radiating means comprise lightening elements, in particular light emitting diodes (LEDs). Said lightening elements have an emission surface area that faces in at least approximate downstream direction of the airstream. With other words, the lightening elements emit light in a direction facing away from the upstream side, i. e. turned away from the airstream, so that the lightening elements are favourably protected from soiling, which may occur, because in the area of their positioning, the airstream has not passed the second odour removing filter and will still carry along soil substances.

On the other hand, a positioning of the lightening elements downstream of the second odour removing filter, specifically downstream the PECO filter element or unit, is also feasible. In this case, the problem of a soiling of these lightening elements is reduced, because of the airstream having already passed through the second odour removing filter with the result of a reduction of remaining substances in the airstream. In this respect it is noted that the illumination direction is modified as well, i. e. the lightening elements have an emission surface area that faces in at least approximate upstream direction of the airstream, so that they emit light in opposite direction to the airstream.

In some implementations, the lightening elements are arranged on a plurality of arrays. The arrays are particularly in parallel arrangement to one another. Accordingly, an array, or matrix respectively, of lightening elements is established, which may uniformly irradiate the second odour removing filter element or unit.

Moreover, the radiating means may be flowed round by the airstream, hence operating to some extent as a flow divider. In order to prevent any impairment, e. g. destruction or heavy soiling, of the radiating means, in particular the lightening elements, a protective shielding is favourably arranged upstream of the radiating means. A particularly preferred solution provides for an arrangement of the radiating means on the downstream side of the protective shielding. In this case, the protective shielding may also operate as a support structure for the radiating means, specifically of the lightening elements.

In some implementations, the extraction device further comprises an exhaust duct or chimney including a diverter element or unit configured to redirect exhaust airstream. One particular solution is characterized by splitting up the exhaust airstream into at least two directions, which may be opposite directions. A positioning of the diverter element or unit as far downstream as possible, preferably at an outlet of the exhaust duct or chimney, may be beneficial. The diverter element or unit may also form an outlet of the exhaust duct or chimney.

According to a specific embodiment, the diverter element or unit comprises at least one diverter outlet port or opening, which includes or forms a fitting aperture for receiving the second odour removing filter. More specifically, the diverter opening or outlet is configured for receiving a filter holder of the second odour removing filter. Said filter holder preferably also supports the lightening elements. The installation of the second odour removing filter in the diverter of the extraction device supports prevention of both the filter itself and of the lightening elements from soiling, so that a steady performance during the life span of the appliance may be guaranteed. Moreover, the positioning in the diverter also enables a safe and easily accessible installation.

According to another specific embodiment, the extraction device, e. g. the extraction device being part of the herein disclosed system, is or comprises a downdraft extraction system with an exhaust duct or a positive pressure channel section of an air channel of the extraction device, which includes or is configured to receive the second odour removing filter, in particular by means of at least one of
- a plug-in mounting,
- a fast connection with an extraction fan, which is configured to convey the air through an air channel of the extraction device,
- a fast connection with an air channel of the extraction device, which air channel is arranged between the extraction fan and an exhaust air outlet,
- a shape converter between the surface areas of an extraction fan and the air channel.

As already indicated, a particularly preferred system or extraction device according to the present invention is characterized in that the second odour removing filter is at least a part of a modular unit. Modular design concepts in manufacturing operations provides flexibility in the production line, specifically in the setup of different appliance models. Such a modular design concept may include a setup of a plurality of single filter units, particularly an array of single filter units. Said plurality of single filter units preferably provides for a side-by-side or a matrix arrangement. More specifically, the side-by-side arrangement is configured in either a vertical or a horizontal alignment. For example, the modular odour removing filter unit comprises several (e. g. four to six) titanium dioxide-based mesh filters, located on a plastic support, which are irradiated with arrays of UVA lightening elements, such as LEDs. A particularly preferred arrangement of the LEDs is provided by a stringed positioning on LED bars, which may form an LED array by parallel formation of a plurality of LED bars.

Moreover, the extraction system, specifically the photocatalytic filtration module, may also have air sanitization features. That way, it may be configured to eliminate fungi and bacteria from the ambient air in the domestic kitchen during its convection through the extraction device. To this end, the extraction system may also include lightening elements, which emit UVC light, which operates as sanitization means without any particularly designed surfaces. Instead of the implementation of different lightening elements for the emission of UVA light on the one hand, and UVC light on the other hand, specific lightening elements may be used, which are configured to emit both said UV light types.

One specific solution provides for a system or an extraction device with a second odour removing filter, which is arranged or arrangeable in a holder or a retaining frame. Said holder or retaining frame particularly comprises a filter supporting device. Moreover, the holder or retaining frame more particularly further comprises receiving and/or attachment means for an arrangement of the radiating means, specifically of the array of lightening elements, e. g. said LEDs bars. With such a structure of the second odour removing filter, particularly of the filtration module, a compact and self-contained unit is provided.

One further specific embodiment is characterized by a second odour removing filter, which is at least a part of an accessory unit. Said accessory unit is implementable in the extraction device, in particular attachable to an end section of an exhaust air outlet of an air channel of the extraction device. In order to make a suitable connection available, the extraction device and the accessory unit preferably comprise compatible attachment means. Such kind of accessory unit is beneficial in order to be installed independently of the extraction device as an add-on solution.

According to a third aspect of the present invention, the object is further achieved by a household appliance, which comprises the extraction device according to anyone of the herein disclosed embodiments. The household appliance is particularly an extraction hood, more particularly a recirculation hood. The extraction hood is preferably arranged or arrangeable above a cooking hob or a stove, specifically in a kitchen environment. Alternatively, the household appliance may be a combination appliance that comprises a cooking hob in addition to and/or as a carrying structure of the extraction device.

Novel and inventive features of the present invention are set forth in the appended claims.

The present invention will be described in further detail with reference to the drawings, in which
- FIG. 1: is a perspective view of an extraction hood comprising a diverter forming an exhaust opening;
- FIG. 2: is an enlarged single view of the diverter of the extraction hood of FIG. 1;
- FIG. 3: is an exploded view of the diverter of FIG. 2;
- FIG. 4: is a front view of a photocatalytic filter module implemented in an outlet opening of the diverter of FIGs. 2 and 3;
- FIG. 5: is a perspective view of the rear side of the photocatalytic filter module of FIG. 4;
- FIG. 6: is a perspective view of a combination appliance comprising a cooking hob and a downdraft extraction device installed in a kitchen cabinet;
- FIG. 7: is a cross-sectional perspective view of the disassembled combination appliance of FIG. 6 with a frontal surface cut away;
- FIG. 8: is a perspective view of the rear side of the combination appliance of FIG. 7, but with modified exhaust arrangement including a photocatalytic filter module with a plurality of single filter units; and
- FIG. 9: is a front view of a photocatalytic filter module arranged at an exhaust opening of the combination appliance of FIG. 8, but with modified arrangement of the single filter units.

In all figures the same or equivalent part are marked with the same reference numbers.

An extraction hood 10 is configured to take away cooking fumes and vapours generated during cooking processes, in particular when cooking with uncovered cookware. The extraction hood 10 forms a first herein disclosed example embodiment of an extraction device including a filtration system for the separation of grease and odorous substances from the aspirated air.

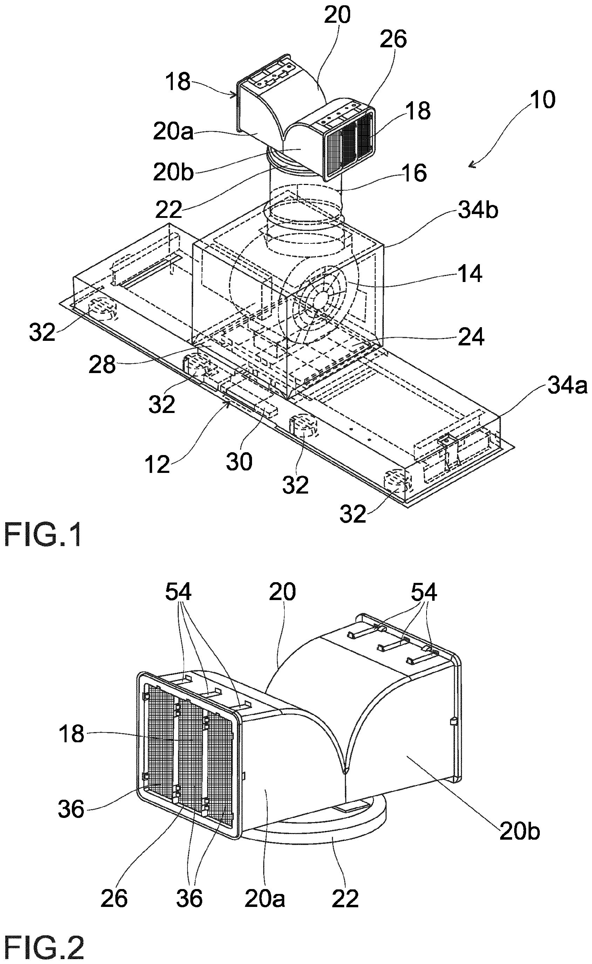

The extraction hood 10 shown in FIG. 1, mainly in a transparent illustration for providing also insight into the interior of this appliance, substantially comprises a suction opening 12 on a bottom side for sucking in the air with cooking fumes and vapours generated during a cooking process on a cooking hob (not shown in FIG. 1) positioned below the extraction hood 10. The aspirated cooking fumes and vapours are conveyed through a channel system of the extraction hood 10 by means of an extraction fan 14 comprising a fan housing, which forms a section of said channel system and which includes a motor-driven fan wheel. After exiting the fan housing, the conveyed air is moved further through a positive pressure channel section of the channel system, which is formed like a chimney 16, towards two outlet openings 18, which are arranged on top of the chimney 16 by facing away from each other, i. e. by blowing out the conveyed air into the ambient kitchen atmosphere in opposed horizontal directions. The two outlet openings 18 are exit openings of a diverter unit 20, which includes one entry port connected to the chimney by a connection flange 22 and two diverter segments 20a, 20b configured for providing a separation of the airstream into two at least approximately equal airstream parts. The presented diverter 10 has a symmetrical structure with similar, but mirror-inverted diverter segments 20a, 20b, so that hereinafter only one of the diverter segments 20a, 20b and its included components have to be described further down below in more detail, in particular with reference to FIGs. 2 to 5.

Said filtration system of the extraction hood 10 comprises a first filter unit 24, which is arranged upstream of the extraction fan 14, i. e. according to the present solution immediately downstream of the suction opening 12. The first filter unit 24 includes a particularly flat grease filter element and a first odour filter element based on activated carbon material. The first odour filter element is particularly flat as well, and it may form a filter combination with the grease filter element. The filtration system further comprises a second odour filter arrangement, which is based on catalytic reaction and which is positioned at the two outlet openings 18 in the shape of two photocatalytic filter modules 26 that are structured identically. This second odour filter arrangement, or more precisely one of the two photocatalytic filter modules 26, will be described in more detail further down below also with reference to FIGs. 2 to 5.

The illustration according to FIG. 1 also shows, that the extraction hood 10 comprises further components such as a control unit 28 for controlling the operation of the extraction hood 10, a user interface 30 for user inputs e. g. for setting a fan speed, and a plurality of lamps 32 configured to illuminate the cooking surface below the extraction hood 10. Said components are enclosed by a first hood housing part 34a, while a second housing part 34b encloses the extraction fan unit 14.

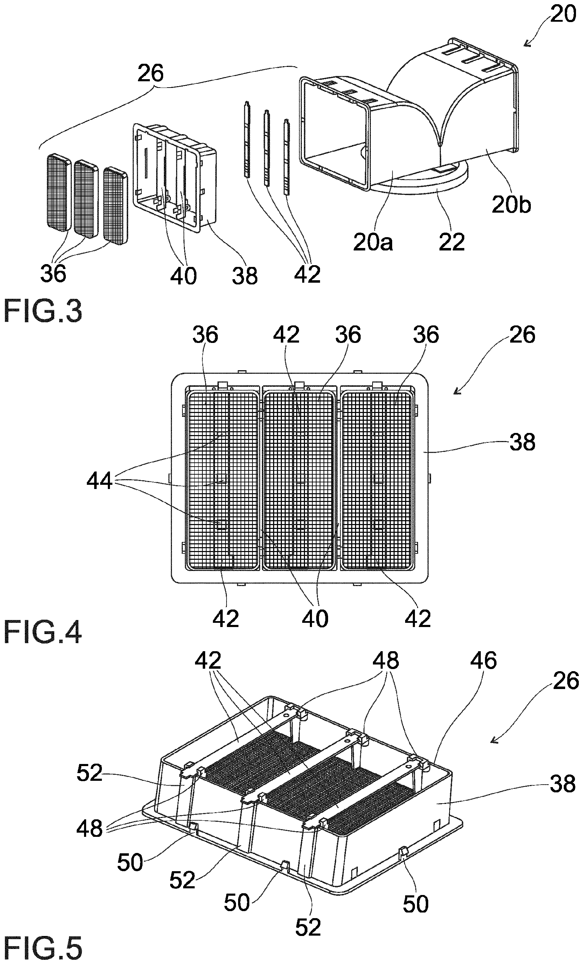

Referring now to FIG. 2, which is an enlarged presentation of the diverter 20 of the extraction hood 10 according to FIG. 1. As can be seen in FIG. 2 more detailed compared to FIG. 1, diverter 20 houses the photocatalytic filter modules 26, one each directly at the two outlet openings 18 of the two diverter segments 20a, 20b. More details of one 20a of the two diverter segments 20a, 20b are provided in FIG. 2 and in the exploded view of FIG. 3, but the arrangement in the other diverter segment 20b is congruent. Due to its positioning, the photocatalytic filter module 26 included in the outlet opening 26 forms an end piece thereof, i. e. the exhaust air leaves the diverter 20, and in that also the entire air channel of the extraction hood 10 after having passed the photocatalytic filter module 26. Moreover, as illustrated in detail in FIG. 3, the photocatalytic filter module 26 consists of a number of three mesh filter elements, which more specifically are titanium dioxide-based mesh filter elements 36, and which are arranged in a filter module frame 38 formed as a stiff plastic support. The number of three mesh filter elements 36 is particularly tailored to the illustrates specific application, however, it is pointed out that the number of mesh filter elements 36 may vary in other specific applications, more specifically, three or more mesh filter elements 36 may be implemented. Upstream of the mesh filter elements 36, an array of UVA light emitting diodes (LEDs) configured to irradiate the mesh filter elements 36 is arranged. Said LEDs array is formed by three LED bars 42 arranged in parallel to each other as well as parallel to the mesh filter modules surfaces. In the same way as described above for the number of mesh filter elements 36, also the number of LED bars 42 may depend on the specific appliance, in a more general way the quantity of LED bars 42 may be three or more or less than three, whichever number may be feasible for the specific appliance. With such configuration, a uniform illumination with UVA light of the mesh filter elements 36 is provided. The wavelength of UVA LEDs is adjusted to be below 380 nm, with a nominal value of about 365 nm. The photocatalytic filter degrades the odorous substances, particularly volatile organics, comprised in the conveyed air, which come in contact with the mesh filter elements 36, thus effectively removing said odorous substances from the air, and - due to the recirculating operation of the extraction hood 10 - also from the ambient atmosphere. The photocatalytic filter module 26 is self-cleaning and does not need replacement.

Each one of the illustrated photocatalytic filter module 26 comprises three mesh filter elements 36. In general, extraction devices with photocatalytic filtration may include a total number of four to six mesh filters elements 36, in particular sized 100*40*8 mm, which mesh filter elements 36 may be irradiated by four to six LED bars 42. However, as previously mentioned, there shall not be any specific limitation to this total number of mesh filter elements 36. The number of LEDs 44 on each LED bar 42 may be three or four.

By FIG. 4 the assembly of the components of the photocatalytic filter module 26, as individually presented in the exploded view of FIG. 3, is shown. The assembled photocatalytic filter module 26 is illustrated by a front view. The mesh filter elements 36 are featured in slightly translucent manner in order to provide a perspective onto the LED bars 42 arranged behind the mesh filter elements 36.

A perspective view of the rear side of the assembled photocatalytic filter module 26 is provided by FIG. 5. This illustration further discloses the spaced arrangement of the LED bars 42, which is realized by a placement of the LED bars 42 on an inner edge of the filter module frame 38, on which fixation clamps 48 are arranged, formed thereon in one piece. Moreover, FIG. 5 also provides information about the fixation of the filter module frame 38 at the outlet opening 18 of the diverter 20, which is realized by engagement hooks 50 arranged on the filter module frame, formed thereon in one piece. Said engagement hooks 50 are configured to snap into or behind related engagement edges (not shown) arranged close to an outer edge of the outlet opening 18 of the diverter 20. In order to provide geometrical stability and to enable a guided insertion of the filter module frame 38, the filter module frame 38 comprises guide bars 52 on an outer surface touching the inner surface of the diverter outlet opening 18, which guide bars 52 engage into related slits 54 implemented in the end section of the diverter wall and providing insertion openings at the outlet opening 18 for the insertion of the guide bars 52. Finally, an electrical connection may be realized by means of cables and plugs contacting the LED bars, what, however, is not illustrated in the figures.

It is noted that the photocatalytic filter module 26 is particularly based on Photo Electro Chemical Oxidation technology, hence forming a PECO filter module.

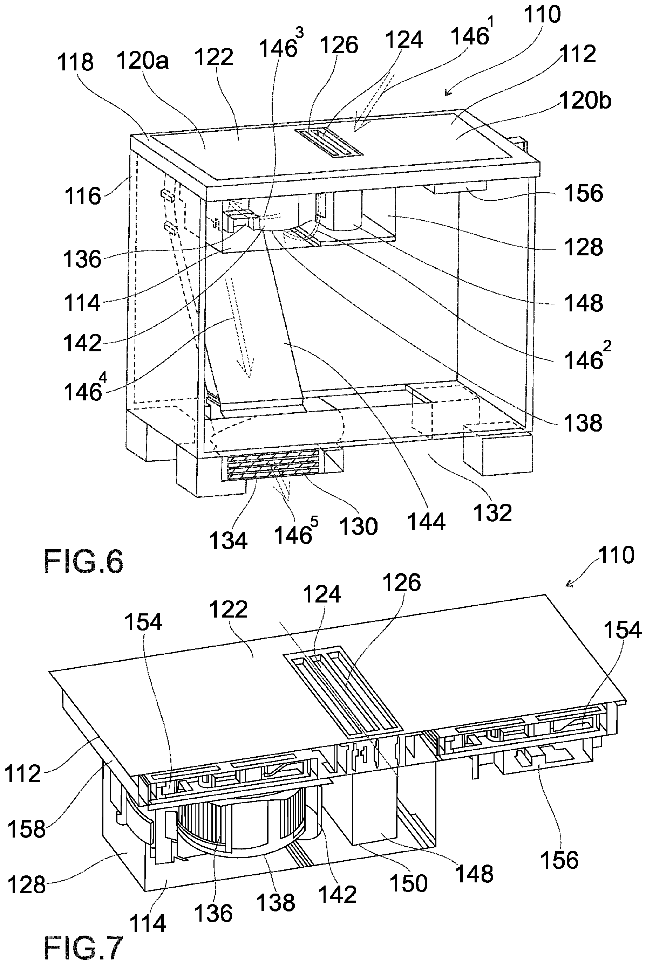

FIG. 6 illustrates a general setup of a standard combination appliance 110 comprising a cooking hob 112 and a downdraft extraction device 114 installed in a kitchen cabinet 116, which forms a second example embodiment of an extraction device including a filtration system comprising an odour filter unit based on catalytic reaction. The cooking hob 112 is implemented in a cut-out of a kitchen countertop 118 forming a top cover plate of the kitchen cabinet 116. Similar to the extraction hood 10 according to the first example embodiment above, the downdraft extraction device 114 is configured to take away cooking vapours occurring during cooking processes. The cooking hob 112 comprises cooking regions 120a, 120b arranged on a left half and a right half of a cooktop 122 of the cooking hob 112, which left and right halves are separated from each other by a suction opening 124 for an intake of the cooking vapours, the suction opening 124 being arranged alongside a cooktop centreline. The suction opening 124 is covered by a cover grid 126 for preventing items, e. g. cookware, to fall into the suction opening 124. Instead of the cover grid 126 a lid may be used for entirely covering the suction opening when the extraction device 114 is out of use, but for the operation of the extraction device 114 the lid is pivotable into an upright open position.

A housing 128 of the extraction device 114 is shown in FIG. 6 in transparent illustration. Said housing 128 provides a closed outer shell or channel segment for a flow of the sucked-in cooking vapours on their way from the suction opening 124 to an exhaust opening 130 in a base area 132 of the kitchen cabinet 116. Said exhaust opening 130 is also covered, namely by an outlet grille 134.

The flow of the sucked-in cooking vapours through the extraction device 114 is driven by the operation of an extraction fan 136 arranged inside of the housing 128. Said extraction fan 136 comprises a bottom-sided intake opening 138 for sucking the cooking vapours from the interior space of the housing 128.

A rear-sided fan outlet is arranged for a horizontal exit of the air blown out backwards from the extraction fan housing 142. The fan outlet is connected to a first end of an air duct 144 designed as a rectangular tube and forms a second channel arranged downstream the above-mentioned first channel. Directly at the passage from the fan outlet to the air duct 144, an air duct bending by 90 degrees is implemented, which redirects the air flow from horizontal to vertical downwards. The air duct 144 may be guided alongside a rear side of the kitchen cabinet 116 and may be bent again by 90 degrees close to a rear lower edge of the kitchen cabinet 116 in order to direct the airflow towards exhaust opening 130 in the base area 132 of the kitchen cabinet 116. Accordingly, the second end of the air duct 144 is connected to the exhaust opening 130. The embodiment illustrated in FIG. 6 shows a solution of the air duct 144 with an inclined section of its downwardly directed portion, directed slightly to the right. Naturally, a solution with said portion arranged in an exact vertical direction is considerable as well.

The course of the cooking vapours from the cooking area through the extraction device 114 to a re-entry into ambient air is illustrated in FIG. 6 by dotted arrows 146¹ to 146⁵. On their way through the extraction device 114, the cooking vapours pass through a filter assembly 148, which is arranged downstream directly behind the suction opening 124 for providing a purification of the conveyed air. Said filter assembly 148 includes a filter carrier 150 supporting a filter element (not shown) that is configured for filtering out grease particles and droplets. In addition to the grease filter element, an odour filter element is included in the filter assembly 148, too. The odour filter element, which is designed as an activated carbon filter, may be also supported by the filter carrier 150 in a similar way as the grease filter element. More specifically, the grease filter and active carbon filter elements are hold by the filter carrier 150 in a parallel arrangement.

The cross-sectional view of FIG. 7 further shows two power boards 154, one for the left cooking region 120a and one for the right cooking region 120b, the power boards 154 providing cooking zones in the left and right cooking regions 120a, 120b with electrical power. In the present embodiment, the cooking hob 112 is an induction cooking hob and the cooking zones are defined by induction coils (not shown) that are arranged below the cooktop 122 of the cooking hob 112. Attached to the bottom side of the power board 154 assigned to the right cooking region 120b, a further circuit board is arranged forming a control electronics 156 for the combination appliance 110. A cooking hob housing 158 encloses the components of the cooking hob 112, specifically said power boards 154 and said control electronic 156.

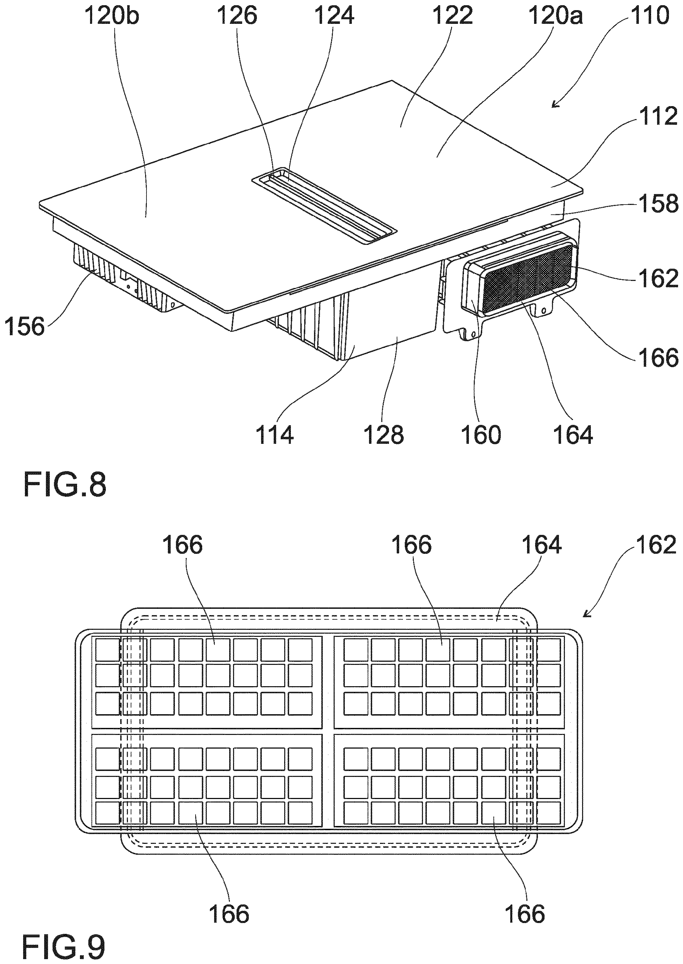

The structure of the combination appliance 110 with the air duct 144 inside of the kitchen cabinet 116 and the exhaust opening 130 on the front of the cabinet 116 as shown in FIG. 6 is only one installation option. In another exemplary installation, which is illustrated by the perspective view of the rear side of the combination appliance 110 according to FIG. 8, the illustrated air duct 144 is replaced by a direct exhaust opening 160 at the cabinet rear side through an opening in the rear-sided cabinet wall. In a similar way as to the extraction hood 10 according to the first example embodiment, more specifically its outlet openings 18 at the diverter segments 20a, 20b, said direct exhaust opening 160 of the extraction device 114 at the cabinet rear side houses a photocatalytic filter module 162, which may be of a similar structure and operating in the same way as the photocatalytic filter modules 26 of the first example embodiment. Moreover, it may also be a PECO filter module. Similar to the structure according to the first example embodiment, the photocatalytic filter module 162 comprises a plurality of single filter units, specifically mesh filter elements. In the illustrated embodiment according to FIG. 8 five single mesh filter elements 166 are included in a related filter module frame 164.

Finally, FIG. 9 presents a front view of a photocatalytic filter module 162 arranged at the exhaust opening 160 of the combination appliance 100 of FIG. 8. However, the arrangement of the mesh filter elements 166 in FIG. 9 is modified over the structuring according to FIG. 8, i. e. the mesh filter elements 166 are arrayed in a two-by-two matrix.

In addition to the previously described air purification performed by the extraction devices according to the first and second example embodiments, the photocatalysis technology may also be effective for air sanitization. It is to be noted, that the microbiological species that come in contact with the photocatalytic filter element can be degraded by this filter after a suitable contact time. So, the effectiveness of the filter for air sanitization is limited to species trapped by the filter itself. Therefore, in order to further improve degradation of any kind of substances, an air sanitization processing may be also implemented in the extraction device. To this end, UVC light emitting elements are added to the filtration module, wherein such UVC light emitting elements may be added to UVA LEDs supporting structure and/or to the photocatalytic filter module 26, 162 as previously describe.

Finally, although a combination appliance 110 with specific dimensions is presented by FIGs. 6 to 8, the herein described setups of combination appliance 110 may be applicable to all known sizes of cooking hobs 112 and respective combination appliances 110 with a width of at least 580 mm. A typical width of a cooking hob, for which the present invention is applicable, is between 600 to 800 mm, however, the present invention is not limited to this range. Two, three or four, or even more, cooking zones may be provided, specifically depending on the size of the cooking hob 112.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

Moreover, features which are described in the context of separate aspects and embodiments of the invention may be used together and/or be interchangeable. Similarly, features described in the context of a single embodiment may also be provided separately or in any suitable sub-combination.

### List of reference numerals

- 10: extraction hood
- 12: suction opening
- 14: extraction fan
- 16: chimney
- 18: outlet openings
- 20: diverter unit
- 20a,20b: diverter segments
- 22: connection flange
- 24: first filter unit
- 26: photocatalytic filter modules
- 28: control unit
- 30: user interface
- 32: lamps
- 34a,34b: hood housing parts
- 36: mesh filter elements
- 38: filter module frame
- 40: struts
- 42: LED bars
- 44: LEDs
- 46: inner edge
- 48: fixation clamps
- 50: engagement hooks
- 52: guide bars
- 54: slits
- 110: combination appliance
- 112: cooking hob
- 114: downdraft extraction device
- 116: kitchen cabinet
- 118: kitchen countertop
- 120a,120b: cooking regions
- 122: cooktop
- 124: suction opening
- 126: cover grid
- 128: extraction device housing
- 130: exhaust opening
- 132: base area
- 134: outlet grille
- 136: extraction fan
- 138: intake opening
- 142: fan housing
- 144: air duct
- 146^{1 to 5}: arrows indicating air flow
- 148: filter assembly
- 150: filter carrier
- 154: power boards
- 156: control electronics
- 158: cooking hob housing
- 160: direct exhaust opening
- 162: photocatalytic filter module
- 164: filter module frame
- 166: mesh filter elements

## Claims

1. A system comprising an extraction device (10, 114) for extraction of air and a filter element or unit (26, 162) for an extraction device (10, 114),
wherein the filter element or unit (26, 162) is preferably a photocatalytic filter element or unit,
wherein the filter element or unit (26, 162) is configured to be implemented selectively in an extraction device (10, 114), which is either of the type of
- an extraction hood (10), particularly a recirculation hood, preferably arranged or arrangeable above a cooking hob or a stove, or
- a downdraft extraction device (114), particularly being or comprising a downdraft extraction system or downdraft extraction unit of a combination appliance (110), which further comprises a cooking hob (112),
and wherein the filter element or unit (26, 162) comprises a first attachment means, which is compatible with and/or connectable to a second attachment means, which second attachment means is included in the extraction device (10, 114), which is selected or selectable for the implementation of the filter element or unit (26,162), the second attachment means in particular being arranged in an exhaust duct or chimney (16) of the extraction hood (10) and/or in a channel section, preferably in a positive pressure channel section of an air channel (144) of the downdraft extraction device (114).

2. The system according to claim 1, wherein the exhaust duct or chimney (16) of the extraction hood (10) includes a diverter element or unit (20) configured to redirect exhaust airstream, particularly by splitting up the exhaust airstream into at least two airstreams flowing into different directions, more particularly into opposite directions, the diverter element or unit (20) preferably being arranged or arrangeable at or forming an outlet of the exhaust duct or chimney (16).

3. The system according to claim 1 or 2, wherein the filter element or unit (26, 162) is an odour removing filter, in particular a second odour removing filter.

4. An extraction device (10, 114) for extraction of air, in particular an extraction device (10, 114) as comprised in the system according to anyone of the preceding claims, the air particularly including fumes and/or vapours, the extraction device (10, 114) comprising an extraction system, which comprises
- a grease filter and a first odour removing filter, in particular an activated carbon filter, wherein the grease filter and the first odour removing filter are particularly included in or held by a common filter unit (24) or carrier (148), and
- a second odour removing filter (26, 162), particularly a photocatalytic filter element or unit, more particularly a filter element or unit based on Photo Electro Chemical Oxidation (PECO) technology.

5. The extraction device (10, 114) according to claim 4, wherein the second odour removing filter (26, 162) is arranged
- downstream of the grease filter and particularly downstream of the first odour removing filter,
and/or
- downstream of an extraction fan, which is configured to convey the air through an air channel (16, 144) of the extraction device (10, 114),
- preferably at an end section of a positive pressure channel section of an air channel (16, 144) of the extraction device (10, 114).

6. The extraction device (10, 114) according to claim 4 or 5, wherein the grease filter and particularly the first odour removing filter is or are accessible at or through, particularly removable from, an air inlet opening (12, 124) of an air channel (16, 144) of the extraction device (10, 114), and wherein the second odour removing filter (26, 162) is preferably accessible at or through, particularly removable from, an exhaust air outlet (18, 130, 160) of the air channel (16, 144) .

7. The system according to claim 3 or the extraction device (10, 114) according to anyone of the claims 4 to 6, wherein the second odour removing filter (26, 162) is a photocatalytic filter element or unit comprising a filter element (36, 166) or surface with a catalyst, in particular a titanium dioxide catalyst, which is preferably illuminable by radiating means (42) emitting UV light, wherein the radiating means (42) for photocatalytic degradation are arranged or arrangeable spaced from the photocatalytic filter surface with a distance from the filter surface in the range of 5 to 40 mm, preferably 10 to 30 mm, more preferably 15 to 25 mm, most preferably with a distance of about 20 mm.

8. The system or the extraction device (10, 114) according to claim 7, wherein the radiating means (42) are included in the interior of an air channel (16, 144) of the extraction device (10, 114) and are preferably arranged upstream of the photocatalytic filter element or unit (26, 162).

9. The system or the extraction device (10, 114) according to claim 7 or 8, wherein the radiating means (42) comprise lightening elements (44), in particular light emitting diodes, having an emission surface area facing in at least approximate downstream direction of the airstream.

10. The system or the extraction device (10, 114) according to claim 9, wherein the lightening elements (44) are arranged on a plurality of arrays (42), which arrays (42) are particularly in parallel arrangement to one another.

11. The system or the extraction device (10, 114) according to anyone of the claims 7 to 10, wherein the radiating means (42) are flowed round by the airstream, and wherein a protective shielding is arranged upstream of the radiating means (42), the radiating means (42) preferably being arranged on the downstream side of the protective shielding.

12. The extraction device (10, 114) according to anyone of the claims 4 to 11, further comprising an exhaust duct or chimney (16) including a diverter element or unit (20) configured to redirect exhaust airstream, particularly by splitting up the exhaust airstream into at least two directions, more particularly into opposite directions, the diverter element or unit (20) preferably being arranged or arrangeable at or forming an outlet of the exhaust duct or chimney (16).

13. The system according to claim 2 or 3 or the extraction device (10, 114) according to claim 12, wherein the diverter element or unit (20) comprises at least one diverter outlet opening (18), which includes or forms a fitting aperture for receiving the second odour removing filter (26, 162), in particular for receiving a filter holder (38, 164) of the second odour removing filter (26, 162).

14. The system according to claim 3 or the extraction device (10, 114) according to anyone of the claims 4 to 13, wherein the extraction device (10, 114) is or comprises a downdraft extraction system with a positive pressure channel section of an air channel (144) of the extraction device (114), which includes or is configured to receive the second odour removing filter (162), in particular by means of at least one of
- a plug-in mounting,
- a fast connection with an extraction fan (136), which is configured to convey the air through an air channel (144) of the extraction device (114),
- a fast connection with an air channel (144) of the extraction device (10, 114), which air channel (144) is arranged between the extraction fan (136) and an exhaust air outlet (130),
- a shape converter between the surface areas of an extraction fan (136) and the air channel (144).

15. The system according to claim 3 or the extraction device (10, 114) according to anyone of the claims 4 to 14, wherein the second odour removing filter (26, 162) is at least a part of a modular unit, particularly including a plurality of single filter units (36, 166), more particularly an array of single filter units (36, 166), which are preferably arranged side by side or in a matrix arrangement.

16. The system or the extraction device (10, 114) according to claim 15, wherein the second odour removing filter (26, 162) is arranged or arrangeable in a holder or a retaining frame (38, 164), which particularly comprises a filter supporting device, and which more particularly further comprises receiving and/or attachment means (48) for an arrangement of the radiating means (42).

17. The system according to claim 3 or the extraction device (10, 114) according to anyone of the claims 4 to 16, wherein the second odour removing filter (26, 162) is at least a part of an accessory unit, which is implementable in the extraction device (10, 114), in particular attachable to an end section of an exhaust air outlet (18, 130, 160) of an air channel (16, 144) of the extraction device (10, 114), the extraction device (10, 114) and the accessory unit preferably comprising compatible attachment means.

18. A household appliance (10, 100), particularly
- an extraction hood (10), more particularly a recirculation hood, preferably arranged or arrangeable above a cooking hob or a stove,
or
- a combination appliance (110) comprising a cooking hob (112),
the household appliance (10, 100) comprising the extraction device (10, 114) according to anyone of the claims 4 to 17.
